# EUROPEAN PATENT APPLICATION

(11) **EP 2 863 197 A2**
(43) Date of publication of application: **22.04.2015**
(21) Application number: 14189250.5
(22) Date of filing: 16.10.2014
(51) Int. Cl.: G01L 13/02, G01L 19/06

(54) **Pressure transmitter**

(30) Priority: 18.10.2013 JP 2013217138
(71) Applicant: Hitachi, Ltd., Tokyo 100-8280 (JP)
(72) Inventor: Kuwana, Ryo, Tokyo, 100-8280 (JP); Arita, Setsuo, Tokyo, 100-8280 (JP); Baba, Atsushi, Tokyo, 100-8280 (JP); Fushimi, Atsushi, Tokyo, 100-8280 (JP); Shinma, Daisuke, Tokyo, 100-8280 (JP); Hanami, Hideki, Tokyo, 100-8280 (JP); Hara, Isao, Tokyo, 100-8280 (JP); Itou, Takashi, Tokyo, 100-8280 (JP)
(74) Representative: Beetz & Partner mbB

(57) **Abstract**

A pressure transmitter (1) including tube-like pressure introducing pipes (11, 11'), a sealed-in liquid (L), the inside of the pressure introducing pipes (11, 11') being filled with the sealed-in liquid (L), pressure receiving diaphragms (13, 13') for receiving the pressures of measurement fluids (Fh, Fl), the pressure receiving diaphragms (13, 13') being set up in a state where one-side apertures in the pressure introducing pipes (11, 11') are blocked by the pressure receiving diaphragms (13, 13'), a pressure sensor (15) that is set up in common to the other-side apertures in the pressure introducing pipes (11, 11') in a state where the pressure sensor (15) is exposed to the sealed-in liquid (L), and hydrogen-permeation prevention layers (21) that are set up on the pressure receiving diaphragms (13, 13'), wherein the pressure transmitter (1) further includes a hydrogen-storage material that is set up inside the pressure introducing pipes (11, 11').

## Description

### BACKGROUND OF THE INVENTION

The present invention relates to a pressure transmitter. More particularly, it relates to a pressure transmitter that is suitable for being used in radiation environment or high-temperature environment.

In a pressure transmitter, the pressure of a fluid received by its diaphragm is transmitted to a pressure sensor via a sealed-in liquid with which the inside of its pressure introducing pipe is filled. Moreover, the electrical signal corresponding to the pressure detected by this pressure sensor is transmitted to the outside of the pressure transmitter. Pressure transmitters in general are classified into the type of measuring the absolute pressure and the type of measuring the differential pressure.

These pressure transmitters are used for making respective kinds of measurements on a process fluid in such plants as, starting with nuclear-power plant, and petroleum refinement plant, and chemical plant. In these measurements, the measurement accuracy of ±1 % is requested from point-of-views of ensuring the safety of each plant and ensuring the quality of its products. In the long time-period use of each pressure transmitter, however, a partial volume of the hydrogen (i.e., hydrogen atom, hydrogen molecule, hydrogen ion) contained in the process fluid permeates the diaphragm, then becoming bubbles and accumulating within the pressure introducing pipe as the hydrogen bubbles. This phenomenon raises the pressure inside the pressure introducing pipe, thereby deteriorating its pressure transmission characteristics. As a result, it has been difficult to maintain the measurement accuracy.

In view of this difficulty, from conventionally, various technologies have been proposed which are aimed at suppressing the influence of the hydrogen that permeates the diaphragm and intrudes into the inside of each pressure transmitter. For example, in JP-A-2005-114453, the following technology is disclosed: The hydrogen that has permeated the diaphragm is caused to be captured by a hydrogen-storage alloy membrane. This capture is implemented by forming this hydrogen-storage alloy membrane on the diaphragm's one-side surface that is in contact with the sealed-in liquid. According to JP-A-2005-114453, a technology like this makes it possible to maintain the pressure transmission characteristics by suppressing the occurrence of the hydrogen bubbles within the sealed-in liquid.

### SUMMARY OF THE INVENTION

The above-described conventional technologies, however, are aimed at reducing the influence of the hydrogen that has permeated the diaphragm from the outside of each pressure transmitter. In other words, no consideration has been given to gases that are generated in the inside of each pressure transmitter, and the hydrogen that has permeated the diaphragm and has intruded into the inside of each pressure transmitter. Namely, the sealed-in liquid, with which the inside of the pressure introducing pipe of each pressure transmitter is filled, is decomposed by radiation or heat under special environments such as radiation environment or high-temperature environment. This radiation or heat decomposition of the sealed-in liquid generates such kinds of gases as hydrogen and hydrocarbons. These gases generated are changed to bubbles when their dissolution volumes exceed the solubility of the sealed-in liquid. This phenomenon also deteriorates the pressure transmission characteristics in each pressure transmitter.

In view of this problem, an object of the present invention is to provide the following pressure transmitter: A pressure transmitter that is capable of suppressing with certainty the occurrence of the bubbles inside the pressure introducing pipes, and that, based on this feature, makes it possible to maintain the pressure transmission characteristics over a long time-period.

In order to accomplish an object like this, the pressure transmitter of the present invention includes tube-like pressure introducing pipes, a sealed-in liquid, the inside of the pressure introducing pipes being filled with the sealed-in liquid, pressure receiving diaphragms for receiving the pressures of measurement fluids, the pressure receiving diaphragms being set up in a state where one-side apertures in the pressure introducing pipes are blocked by the pressure receiving diaphragms, and a pressure sensor that is set up in common to the other-side apertures in the pressure introducing pipes in a state where the pressure sensor is exposed to the sealed-in liquid, wherein the pressure transmitter further includes hydrogen-permeation prevention layers that are set up on the pressure receiving diaphragms, and a hydrogen-storage material that is set up inside the pressure introducing pipes.

According to the pressure transmitter of the present invention whose configuration is as described above, it becomes possible to prevent the intrusion of the hydrogen into the pressure introducing pipes. Simultaneously, it becomes possible to suppress the generation of the gases because of its configuration that the hydrogen generated by the radiation or heat decomposition of the sealed-in liquid is stored into the hydrogen-storage material. These features allow implementation of the stabilization of the pressures inside the pressure introducing pipes, thereby making it possible to maintain the pressure transmission characteristics over a long time-period.

Other objects, features and advantages of the invention will become apparent from the following description of the embodiments of the invention taken in conjunction with the accompanying drawings.

### BRIEF DESCRIPTION OF THE DRAWINGS

FIG. 1 is a diagram for illustrating the configuration of the pressure transmitter of a first embodiment according to the present invention;
FIG. 2 is a diagram for explaining the hydrogen storage based on a hydrogen-storage material;
FIGS. 3A, 3B, and 3C are diagrams for illustrating deployment examples of hydrogen-storage materials in the pressure introducing pipes;
FIGS. 4A and 4B are diagrams for illustrating deployment examples of hydrogen-permeation prevention layers in the pressure receiving diaphragms;
FIG. 5 is a diagram for explaining the decomposition of the sealed-in liquid by the irradiation with gamma rays, and the hydrogen storage based on the hydrogen-storage material;
FIG. 6 is a diagram for illustrating the configuration of the pressure transmitter of a second embodiment according to the present invention;
FIG. 7 is a diagram for illustrating the configuration of the pressure transmitter of a third embodiment according to the present invention; and
FIG. 8 is a diagram for illustrating an application example of the differential-pressure-measurement-used pressure transmitter in a nuclear-power plant.

### DESCRIPTION OF THE EMBODIMENTS

Hereinafter, based on the drawings, the explanation will be given below concerning the embodiments of the present invention in accordance with the following order:
1. the first embodiment (pressure transmitter used for differential-pressure measurement)
2. the second embodiment (pressure transmitter used for absolute-pressure measurement)
3. the third embodiment (pressure transmitter equipped with intermediate diaphragms)
4. the fourth embodiment (application example of pressure transmitter in nuclear-power plant)

### ≪ 1 st Embodiment ≫

### (pressure transmitter used for differential-pressure measurement)

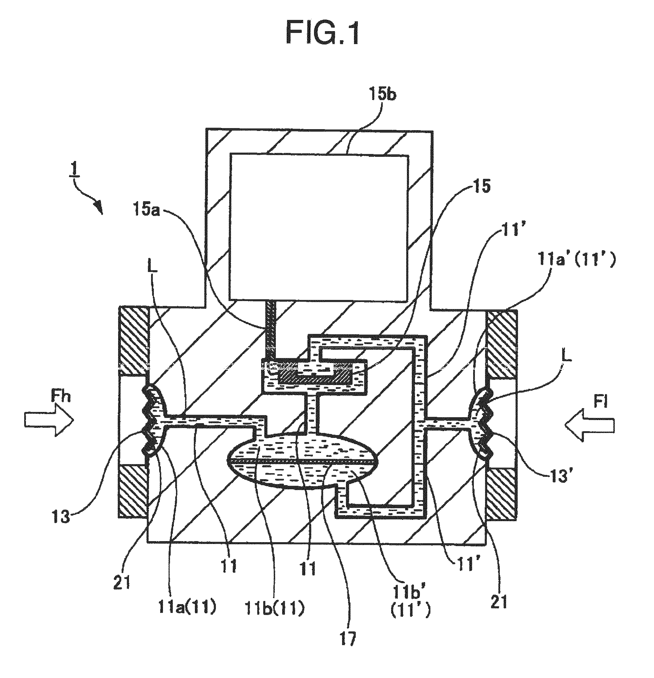

FIG. 1 is a diagram for illustrating the configuration of the pressure transmitter of the first embodiment. The pressure transmitter 1 illustrated in FIG. 1 is used for the pressure measurement where the process fluid in each kind of plant is employed as the measurement fluid. Concretely, this pressure transmitter 1 is used for measuring the pressure difference between two points (i.e., high-pressure side and low-pressure side).

### <configuration of pressure transmitter 1>

This pressure transmitter 1 includes a pressure introducing pipe 11 set up in correspondence with a measurement fluid Fh on the high-pressure side, and a pressure introducing pipe 11' set up in correspondence with a measurement fluid Fl on the side lower than the high-pressure side. The inside of a single pair of these pressure introducing pipes 11 and 11' is filled with a sealed-in liquid L. A one-side aperture in each of the pressure introducing pipes 11 and 11' is blocked by each of pressure receiving diaphragms 13 and 13'. Also, this pressure transmitter 1 includes a single pressure sensor 15 set up in common to the other-side apertures in the pressure introducing pipes 11 and 11', and a single center diaphragm 17 set up in parallel to this pressure sensor 15. Moreover, in particular, the configurations that are characteristic of the pressure transmitter 1 of the present first embodiment are the following points: A hydrogen-storage material is set up inside the pressure introducing pipes 11 and 11', and hydrogen-permeation prevention layers 21 are set up on the pressure receiving diaphragms 13 and 13'.

Hereinafter, in accordance with the following order, the explanation will be given below concerning the details of the respective configuration components set up in the pressure transmitter 1: The pressure introducing pipes 11 and 11', the sealed-in liquid L, the pressure receiving diaphragms 13 and 13', the pressure sensor 15, the center diaphragm 17, the hydrogen-storage material, and the hydrogen-permeation prevention layers 21.

### [pressure introducing pipes 11 and 11']

The pressure introducing pipes 11 and 11' respectively include pressure receiving chambers 11a and 11a', each of which is formed by enlarging the aperture diameter of the one-side aperture in each of the pressure introducing pipes 11 and 11'. The one-side aperture, which is enlarged by each of the pressure receiving chambers 11a and 11a', is blocked by each of the pressure receiving diaphragms 13 and 13'. It is assumed that each of the pressure receiving chambers 11a and 11a' is formed in its internal shape that does not obstruct the movement of the pressure receiving diaphragms 13 and 13' caused by their pressure receptions.

Also, the pressure introducing pipes 11 and 11' respectively include excessive pressure's pressure discharging chambers 11b and 11b' in portions of the other-side apertures in the pressure introducing pipes 11 and 11'. These portions are on the reverse sides to the sides on which the one-side aperture is blocked by each of the pressure receiving diaphragms 13 and 13'. The pressure discharging chambers 11b and 11b' are formed by enlarging the aperture diameters of these portions. Moreover, the pressure discharging chambers 11b and 11b', which are equipped with the shapes where the aperture diameters of these portions are enlarged, are deployed in a manner where the single center diaphragm 17 is held by being sandwiched therebetween, and are in a state where the pressure discharging chambers 11b and 11b' are separated from each other by this center diaphragm 17. It is assumed that each of the pressure discharging chambers 11b and 11b' is formed in its internal shape that does not obstruct the movement of the center diaphragm 17 caused by its pressure reception.

Furthermore, the pressure introducing pipes 11 and 11' are equipped with branched pipes. The pressure sensor 15 is so configured as to be set up in the apertures on the front-end sides of the branched pressure introducing pipes 11 and 11'. Here, for example, the pressure introducing pipe 11, which is set up in correspondence with the measurement fluid Fh on the high-pressure side, is equipped with the pipe that is branched from the wall portion of the pressure discharging chamber 11b. Meanwhile, the pressure introducing pipe 11', which is set up in correspondence with the measurement fluid Fl on the low-pressure side, is equipped with the pipe that is branched before the pressure discharging chamber 11b'.

In the pressure introducing pipes 11 and 11', the apertures on the front-end sides of these branched pipes are deployed in a manner where the single pressure sensor 15 is held by being sandwiched therebetween, and are in a state where the pressure introducing pipes 11 and 11' are separated from each other by this pressure sensor 15.

### [sealed-in liquid L]

The sealed-in liquid L is sealed in the single pair of pressure introducing pipes 11 and 11' that are blocked as described above. The inside of the pressure introducing pipes 11 and 11', which include the pressure receiving chambers 11a and 11a', the pressure discharging chambers 11b and 11b', and the branched pipes up to the pressure sensor 15, is filled with the sealed-in liquid L. The sealed-in liquid L, with which the inside of the pressure introducing pipes 11 and 11' is filled, may be of one and the same kind. For example, this sealed-in liquid L is silicon oil. As one example, this sealed-in liquid L is dimethyl silicon oil, or the methylphenyl silicon oil containing phenyl groups. Of these silicon oils, the phenyl group of the methylphenyl silicon oil is a group that possesses the double-bond structure having high bonding strength. Accordingly, it is highly unlikely that the hydrogen atoms and methyl groups will be dissociated from the methylphenyl silicon oil by the radiation decomposition or heat decomposition of the methylphenyl silicon oil. Consequently, the methylphenyl silicon oil is used preferably.

Incidentally, if a bias exists between the deployment environments of the pressure introducing pipes 11 and 11', only the sealed-in liquid L of one of the pressure introducing pipes 11 and 11' may be the methylphenyl silicon oil containing phenyl groups, and the other sealed-in liquid L may be the dimethyl silicon oil.

### [pressure receiving diaphragms 13 and 13']

The pressure receiving diaphragms 13 and 13' are diaphragms that are directly exposed to the measurement fluids Fh and Fl for receiving the pressures of the measurement fluids Fh and Fl. Incidentally, the measurement fluids Fh and Fl are the process fluids in each kind of plant where this pressure transmitter 1 is set up.

These pressure receiving diaphragms 13 and 13' are respectively fixed to the pressure introducing pipes 11 and 11' in a state where the apertures of the pressure receiving chambers 11a and 11a' in the pressure introducing pipes 11 and 11' are respectively blocked by these pressure receiving diaphragms 13 and 13'. Moreover, these pressure receiving diaphragms 13 and 13' are set up in each kind of plant in such a manner that the one pressure receiving diaphragm 13 is exposed to the high-pressure-side measurement fluid Fh, and the other pressure receiving diaphragm 13' is exposed to the low-pressure-side measurement fluid Fl. On account of this, these pressure receiving diaphragms 13 and 13' are configured using a material whose resistivity against the measurement fluids Fh and Fl is taken into consideration. Accordingly, the diaphragms 13 and 13' are configured using, e.g., stainless steel. Also, the pressure receiving diaphragms 13 and 13' may also be diaphragms that are machined into, e.g., a waveform shape.

### [pressure sensor 15]

The pressure sensor 15 is used for detecting the pressure that is transmitted via the sealed-in liquid L, with which the inside of the pressure introducing pipes 11 and 11' is filled. The pressure sensor 15 is, e.g., a semiconductor pressure sensor. In this pressure sensor 15, the difference between the pressures applied to both planes of the semiconductor chip is outputted after being converted into an electrical signal. The pressure sensor 15 like this is held by being sandwiched between the pressure introducing pipes 11 and 11' in such a manner that the pressure transmitted via the sealed-in liquid L inside the pressure introducing pipe 11 is received by one plane of the pressure sensor 15, and the pressure transmitted via the sealed-in liquid L inside the pressure introducing pipe 11' is received by the other plane thereof. This configuration results in the configuration that allows the detection of the pressure difference between the high-pressure-side measurement fluid Fh received by the pressure receiving diaphragm 13 and the low-pressure-side measurement fluid Fl received by the pressure receiving diaphragm 13'.

An output circuit 15b is connected to this pressure sensor 15 via a lead line 15a. This output circuit 15b is connected to an external control device that is not illustrated here.

### [center diaphragm 17]

The center diaphragm 17 is an overload-protection-use diaphragm whose deformed amount is small when it responds to a pressure applied thereto. The center diaphragm 17 is deployed in parallel to the pressure sensor 15 in the single pair of the pressure introducing pipes 11 and 11'. The center diaphragm 17 like this is set up as follows: The center diaphragm 17 blocks the apertures of the pressure discharging chambers 11b and 11b' set up in the pressure introducing pipes 11 and 11', and separates the pressure introducing pipes 11 and 11' from each other in these apertures. Simultaneously, both sides of the center diaphragm 17 are exposed to the sealed-in liquid L. On account of this set-up of the center diaphragm 17, even if an excessive pressure is applied to one of the pressure receiving diaphragms 13 and 13', the center diaphragm 17 itself is not deformed significantly. As a result, the deformed amount of each of the pressure receiving diaphragms 13 and 13' does not become significant, either. This feature results in the entire configuration where it is highly unlikely that the damage will occur.

### [hydrogen-storage material]

A hydrogen-storage material is set up inside the pressure introducing pipes 11 and 11'. By being set up in this way, the hydrogen-storage material is deployed in a state of making contact with the sealed-in liquid L. Here, in particular, it is preferable that the hydrogen-storage material is deployed along the installation direction of the pressure introducing pipes 11 and 11'.

Here, the hydrogen-storage material is configured with each of metals having hydrogen-absorbing property, or an alloy of them. The hydrogen-storage material stores hydrogen and hydrogen atoms within hydrocarbons (in detail, chain saturated hydrocarbons) generated inside the pressure introducing pipes 11 and 11'. Concretely, the hydrogen-storage material like this is palladium, magnesium, vanadium, titanium, manganese, zirconium, nickel, niobium, cobalt, calcium, or an alloy of them.

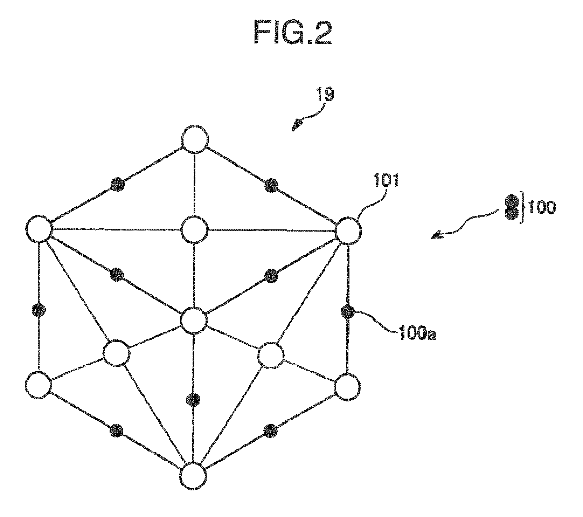

FIG. 2 is a diagram for explaining the hydrogen storage based on a hydrogen-storage material. As one example, FIG. 2 is the diagram for explaining the hydrogen storage in a case where palladium (Pd) is used as the hydrogen-storage material 19. As illustrated in FIG. 2, the palladium, which is the hydrogen-storage material 19, is a face-centered cubic lattice in its crystalline structure. A hydrogen molecule 100 is stored between atoms of palladium atoms 101 as hydrogen atoms 100a. It is known that the hydrogen storage like this allows the palladium to store hydrogen whose volume is 935 times as large as the volume of the palladium itself.

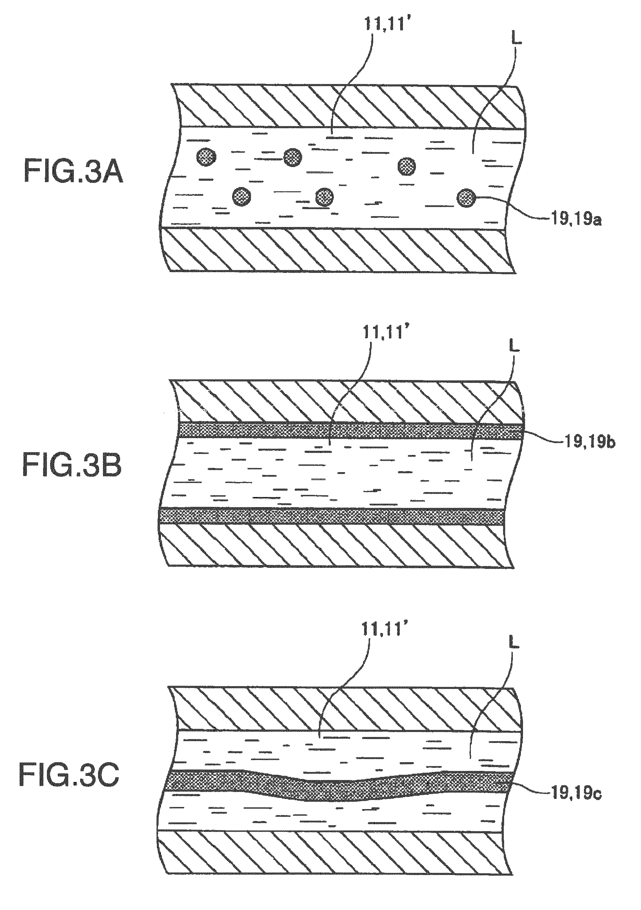

FIGS. 3A, 3B, and 3C are diagrams for illustrating deployment examples of the hydrogen-storage materials 19 in the pressure introducing pipes 11 and 11'. Hereinafter, based on these drawings, the explanation will be given below concerning the deployment states of the hydrogen-storage materials 19 inside the pressure introducing pipes 11 and 11'. Incidentally, hydrogen-storage materials 19a, 19b, and 19c, which will be explained hereinafter, and are so configured as being illustrated in FIGS. 3A, 3B, and 3C, may also be used in a manner of being combined with each other.

FIG. 3A is the diagram for illustrating a configuration where the particle-like hydrogen-storage materials 19a are mixed into the sealed-in liquid L, with which the inside of the pressure introducing pipes 11 and 11' is filled. On account of the configuration like this, the particle-like hydrogen-storage materials 19a are so configured as to be provided along the installation direction of the pressure introducing pipes 11 and 11'.

In this case, the implementation of the following state is preferable: The particle-like hydrogen-storage materials 19a are dispersed into the sealed-in liquid L. As a result of this, the hydrogen-storage materials 19a are mixed into the sealed-in liquid L uniformly. This state allows the influence of the hydrogen-storage materials 19a to be exerted over almost all regions of the pressure introducing pipes 11 and 11'. Also, the particle-like hydrogen-storage material 19a may be either a powder-like material whose particle diameter is smaller than the particle-like hydrogen-storage material, or a solid-like material whose particle diameter is larger than that. The smaller the particle diameter of a hydrogen-storage material 19a becomes, the wider the surface area of the hydrogen-storage material 19a becomes. This fact makes it possible to make the hydrogen-storage speed faster, which is preferable. In this case, depending on the largeness of the particle diameter of a hydrogen-storage material 19a, a colloid-like liquid may also be configured in the state where the hydrogen-storage materials 19a are mixed into the sealed-in liquid L.

Also, when the hydrogen-storage material 19a is the solid-like material that has some extent of largeness, the shape of the hydrogen-storage material 19a is not limited. In this case, if the hydrogen-storage material 19a is composed of a porous material, its surface area becomes wider. This makes it possible to make the hydrogen-storage speed faster, which is preferable.

FIG. 3B is the diagram for illustrating a configuration where the hydrogen-storage materials 19b are provided on the inner walls of the pressure introducing pipes 11 and 11'. On account of the configuration like this, the hydrogen-storage materials 19b are so configured as to be provided along the installation direction of the pressure introducing pipes 11 and 11'.

In this case, the hydrogen-storage materials 19b are provided on the inner walls of the pressure introducing pipes 11 and 11' in, e.g., a membrane-like manner. These membranes are formed using such a method as plating or sputtering method. The inner walls of the pressure introducing pipes 11 and 11', on which the hydrogen-storage materials 19b are provided, include the wall surfaces of the pressure receiving chambers 11a and 11a' and the pressure discharging chambers 11b and 11b'. These wall surfaces have been explained using FIG. 1, and are in contact with the sealed-in liquid L. Moreover, it is preferable that the hydrogen-storage materials 19b are membrane-formed on the inner walls of the pressure introducing pipes 11 and 11' over their widest possible areas.

Also, as another example where the hydrogen-storage materials 19b are provided on the wall surfaces of the pressure introducing pipes 11 and 11', a configuration is also allowable where the particle-like hydrogen-storage materials 19a explained using FIG. 3A are fixed onto the wall surfaces of the pressure introducing pipes 11 and 11'. In this case, it is preferable that, using a welding method, the particle-like hydrogen-storage materials 19a are fixed onto the wall surfaces of the pressure introducing pipes 11 and 11'. According to the configuration like this, it becomes possible to prevent the particle-like hydrogen-storage materials 19a with some extent of largeness from colliding with the pressure receiving diaphragms 13 and 13' or the center diaphragm 17, and deteriorating them thereby.

Incidentally, in the configuration where the center diaphragm 17 is provided, the hydrogen-storage materials 19b may be provided on the center diaphragm 17. In this case, the hydrogen-storage materials 19b are provided on both planes of the center diaphragm 17 which are in contact with the sealed-in liquid L. This makes it possible to make the surface areas of the hydrogen-storage materials 19b even wider.

FIG. 3C is the diagram for illustrating a configuration where the hydrogen-storage material 19c is installed inside the pressure introducing pipes 11 and 11'. The hydrogen-storage material 19c, which is, e.g., a rod-like material, is installed along the pipe direction of the pressure introducing pipes 11 and 11'. On account of the configuration like this, the hydrogen-storage material 19c is so configured as to be provided along the installation direction of the pressure introducing pipes 11 and 11'. The rod-like hydrogen-storage material 19c may also be a wire-like material whose cross section is circular. However, if the hydrogen-storage material 19c is formed into such a large-width cross-section shape as being obtained by pressing and enlarging the wire-like cross-section shape, or if the hydrogen-storage material 19c is composed of a porous material, or if the hydrogen-storage material 19c is installed in a spiral-like manner, its surface area becomes wider. This makes it possible to make the hydrogen-storage speed faster, which is preferable. The rod-like hydrogen-storage material 19c can be machined easily, which makes it possible to suppress its cost.

Incidentally, if a bias exists between the deployment environments of the pressure introducing pipes 11 and 11', the hydrogen-storage materials 19 may also be provided inside only one of the pressure introducing pipes 11 and 11'.

### [hydrogen-permeation prevention layers 21]

The hydrogen-permeation prevention layers 21 are respectively set up on the pressure receiving diaphragms 13 and 13'. The hydrogen-permeation prevention layers 21 are respectively set up as surface layers in the pressure receiving diaphragms 13 and 13' on the sides of the pressure introducing pipes 11 and 11', or are respectively set up as intermediate layers of the pressure receiving diaphragms 13 and 13'. It is preferable that the hydrogen-permeation prevention layers 21 are deployed in a state where the layers 21 are not in contact with the measurement fluids Fh and Fl. This results in a configuration that is capable of suppressing the influence of the hydrogen-permeation prevention layers 21 exerted onto the measurement fluids Fh and Fl, i.e., the process fluids, and the process system associated with these measurement fluids Fh and Fl.

The hydrogen-permeation prevention layers 21 are configured with a hydrogen-storage material or a hydrogen-interruption material. The hydrogen-storage material, with which the hydrogen-permeation prevention layers 21 are configured, is equipped with basically the same property as that of the hydrogen-storage materials explained in the first embodiment. Namely, the hydrogen-permeation prevention layers 21 prevent the permeation of the hydrogen into the pressure introducing pipes 11 and 11' by storing the hydrogen from the sides of the measurement fluids Fh and Fl. Meanwhile, the hydrogen-interruption material, with which the hydrogen-permeation prevention layers 21 are configured, is a material that is capable of storing the hydrogen and interrupting the permeation itself of the hydrogen. This hydrogen-interruption material prevents the permeation of the hydrogen into the pressure introducing pipes 11 and 11' from the sides of the measurement fluids Fh and Fl. Concretely, the hydrogen-interruption material like this is gold, silver, copper, platinum, aluminum, chromium, titanium, or an alloy of them.

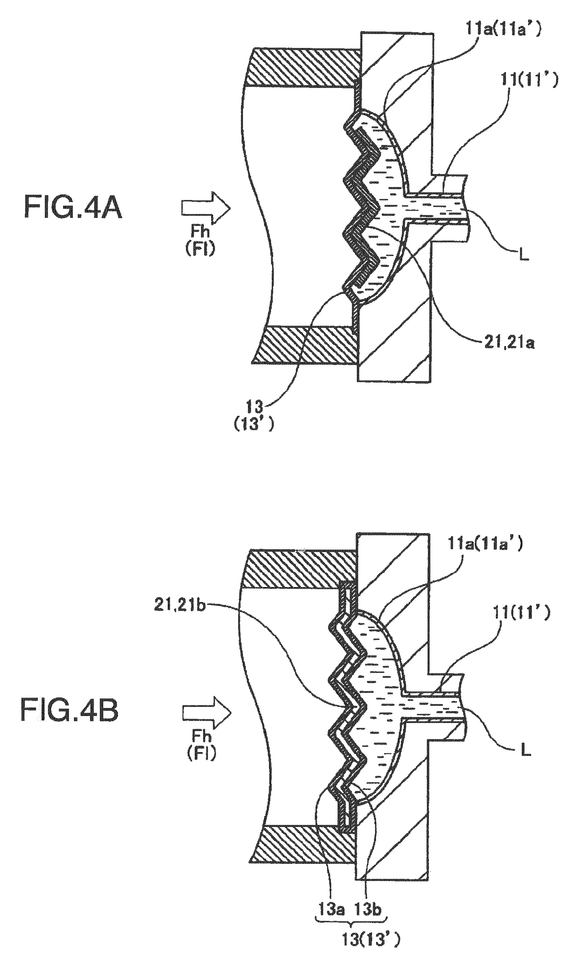

FIGS. 4A and 4B are diagrams for illustrating deployment examples of the hydrogen-permeation prevention layers 21 in the pressure receiving diaphragms 13 and 13'. FIGS. 4A and 4B are the enlarged views of the portion of the high-pressure-side pressure receiving diaphragm 13 illustrated in FIG. 1. Hereinafter, based on these drawings, the explanation will be given below concerning the deployment states of the hydrogen-permeation prevention layers 21 in this pressure receiving diaphragm 13. Incidentally, the configuration that will be explained below is basically the same as in the low-pressure-side pressure receiving diaphragm 13'. Accordingly, the explanation will be given exemplifying the high-pressure-side configuration as its representative example. Also, the hydrogen-permeation prevention layers 21a and 21b, which will be explained hereinafter, and are so configured as being illustrated in FIGS. 4A and 4B, may also be used in a manner of being combined with each other.

FIG. 4A is the diagram for illustrating a configuration where the hydrogen-permeation prevention layer 21a is provided as the surface layer in the pressure receiving diaphragm 13 on the side of the pressure introducing pipe 11. Here, the implementation of the following condition is preferable: The hydrogen-permeation prevention layer 21a is provided in a state where it covers the widest possible area in the pressure receiving diaphragm 13. This suppresses the exposure of the pressure receiving diaphragm 13 to the sealed-in liquid L. Incidentally, if it is possible to ensure the hermeticity of the pressure introducing pipe 11 and the resistivity of the hydrogen-permeation prevention layer 21a, the hydrogen-permeation prevention layer 21a may be provided over the entire surface of the surface layer in the pressure receiving diaphragm 13 on the side of the pressure introducing pipe 11.

The hydrogen-permeation prevention layer 21a like this is membrane-formed on the surface of the pressure receiving diaphragm 13, using such a method as plating or sputtering method. Accordingly, the deployment of the layer 21a onto the pressure receiving diaphragm 13 is easy to implement.

FIG. 4B is the diagram for illustrating a configuration where the hydrogen-permeation prevention layer 21b is provided as the intermediate layer of the pressure receiving diaphragms 13. Here, the implementation of the following condition is preferable: The hydrogen-permeation prevention layer 21b is provided as a thin membrane that is held by being sandwiched between the two pieces of pressure receiving diaphragms 13a and 13b. Also, the size of the prevention layer 21b is equal to a size that blocks the aperture of the pressure receiving chamber 11a, i.e., the one-side aperture of the pressure introducing pipe 11. If the hydrogen-permeation prevention layer 21b like this is configured with a hydrogen-storage material, the prevention layer 21b is not limited to the thin-membrane-like prevention layer. Namely, the hydrogen-permeation prevention layer 21b may also be so configured as to be held by being sandwiched between the two pieces of pressure receiving diaphragms 13a and 13b by installing the powder-like prevention layer therebetween with no clearance set therebetween.

In a state where the thin-membrane-like or powder-like hydrogen-permeation prevention layer 21b is held by being sandwiched between the two pieces of pressure receiving diaphragms 13a and 13b, the prevention layer 21b and the diaphragms 13a and 13b are integrally formed by being rolled and extended. This process allows the hydrogen-permeation prevention layer 21b like this to be integrally formed as the intermediate layer of the pressure receiving diaphragms 13. Also, the hydrogen-permeation prevention layer 21b like this exerts no influence onto the sealed-in liquid L as well as the measurement fluids Fh and Fl.

Incidentally, if a bias exists between the properties of the measurement fluids Fh and Fl, the following configuration is also allowable: The hydrogen-permeation prevention layer 21 is provided on only one side of the pressure introducing pipes 11 and 11'. Moreover, the hydrogen-storage material 19 is provided in only the inside of this one-side pressure introducing pipe.

### <effect of pressure transmitter 1>

The pressure transmitter 1 of the first embodiment explained so far is so configured as to provide the hydrogen-storage materials 19 inside the pressure introducing pipes 11 and 11'. On account of this configuration, even if, under radiation environment or high-temperature environment, the hydrogen atoms and methyl group are dissociated from the sealed-in liquid L composed of, e.g., the silicon oil, the hydrogen is stored into the hydrogen-storage materials 19. Consequently, the concentrations of the hydrogen and hydrocarbons (such as methane, ethane, and propane) within the sealed-in liquid L can be suppressed down to low values.

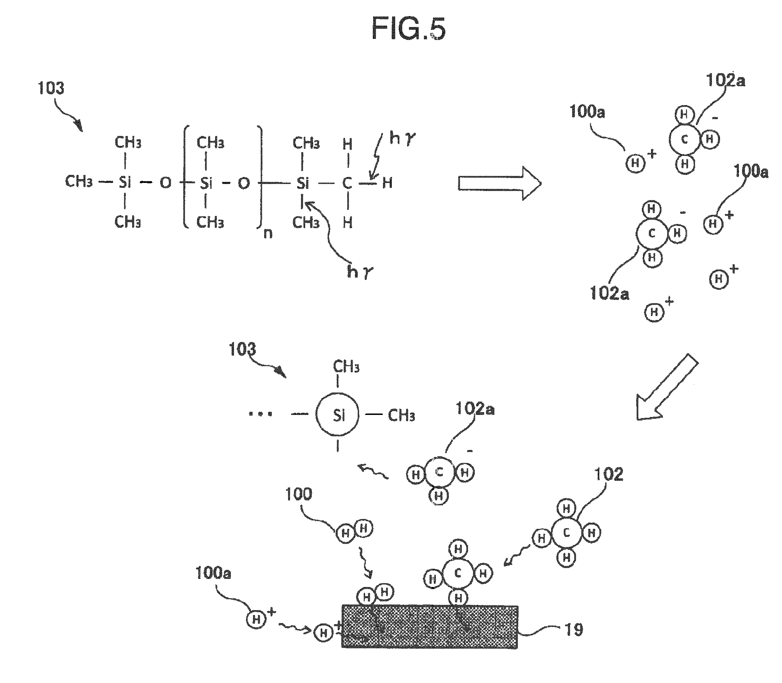

FIG. 5 is a diagram for explaining the decomposition of the silicon oil (dimethyl silicon oil) by the irradiation with radiation such as gamma rays h y , and the hydrogen storage based on the hydrogen-storage material 19. Incidentally, the following cases are conceivable as the irradiation with radiation toward the sealed-in liquid L composed of the silicon oil: Namely, in addition to a case where the pressure transmitter 1 is exposed to a radiation atmosphere area, a case where the sealed-in liquid L is irradiated via the pressure receiving diaphragms 13 and 13' with the radiation contained in the measurement fluids Fh and Fl.

First, the silicon oil 103 used as the sealed-in liquid L is irradiated with gamma rays hy. This irradiation cleaves an inter-C-H bond and an inter-Si-C bond existing within the silicon oil 103. As a result of this, hydrogen atoms 100a and methyl groups 102a are dissociated from the silicon oil 103.

After that, a dissociated hydrogen atom 100a and another dissociated hydrogen atom 100a become bonded to each other, thereby generating a hydrogen molecule 100. Moreover, this hydrogen molecule 100 comes into contact with the hydrogen-storage material 19, thereby being stored into the inside of the hydrogen-storage material 19 as the hydrogen atoms 100a. This storage not only suppresses the generation of the hydrogen molecule 100, but also decreases the amount of the hydrogen atom 100a that become bonded to the methyl group 102a. This makes it possible to suppress the generation of methane 102. Also, the methyl group 102a, which is dissociated from the silicon oil 103, becomes bonded to an unpaired dangling bond of the silicon oil 103 again. This makes it possible to suppress the generation of the gases within the sealed-in liquid. In contrast thereto, in the configuration where no hydrogen-storage material is provided, it is impossible to suppress the generation of the hydrogen molecule 100 and the methane 102. Furthermore, the hydrogen atoms 100a are dissociated from the methyl group 102a, and become bonded to each other. This generates the hydrocarbons such as ethane, propane, and butane. These hydrocarbons are changed to bubbles, which raise the pressures inside the pressure introducing pipes eventually.

Also, the hydrogen atoms within the hydrocarbons are stored into the hydrogen-storage material 19 in accordance with the following manner: Namely, some of the hydrogen atoms 100a and the methyl groups 102a, which are dissociated from the silicon oil 103 by the radiation decomposition of the silicon oil 103, become bonded to each other, thereby becoming the methane 102. After that, the methane 102 comes into contact with the surface of the hydrogen-storage material 19, thereby being dissociated into the hydrogen atoms 100a and the methyl groups 102a on the surface. The dissociated hydrogen atoms 100a are stored by the hydrogen-storage material 19. Meanwhile, the methyl groups 102a become carbon atoms finally, then adhering onto the surface of the hydrogen-storage material 19. The above-described manner is also basically the same regarding ethane, propane, and butane which are generated within the sealed-in liquid. This storage manner makes it possible to prevent the hydrocarbons such as the methane 102 from eventually raising the pressures inside the pressure introducing pipes by being accumulated as the bubbles therein.

Furthermore, the pressure transmitter 1 of the first embodiment is also so configured as to provide the hydrogen-permeation prevention layers 21 on the pressure receiving diaphragms 13 and 13'. On account of this configuration, the hydrogen contained in the measurement fluids Fh and Fl can be prevented from mixing into the sealed-in liquid L, with which the inside of the pressure introducing pipes 11 and 11' is filled.

Here, if this configuration is a configuration where the hydrogen-permeation prevention layers 21 are merely provided on the pressure receiving diaphragms 13 and 13', the hydrogen and hydrocarbons generated by the decomposition of the sealed-in liquid L are not released into the outside. Accordingly, it is impossible to stabilize the pressures inside the pressure introducing pipes 11 and 11'. In order to solve this problem, it is important to suppress the generation itself of the hydrogen and hydrocarbons caused by the decomposition of the sealed-in liquid L. In view of this situation, the hydrogen-storage materials 19 are provided inside the pressure introducing pipes 11 and 11'. Both of the hydrogen and the hydrogen atoms within the hydrocarbons, which are generated by the radiation or heat decomposition of the sealed-in liquid L, are caused to be stored by these hydrogen-storage materials 19. This allows prevention of the generation of the gases within the sealed-in liquid L, thereby making it possible to suppress the variation in the pressure transmission characteristics in the pressure transmitter 1.

Incidentally, if the hydrogen-storage material is used as the hydrogen-permeation prevention layers 21, the hydrogen dissociated from the sealed-in liquid L, and the hydrogen atoms within the hydrocarbons dissociated from the sealed-in liquid L are stored into the hydrogen-permeation prevention layers 21. This allows implementation of the stabilization of the pressures inside the pressure introducing pipes 11 and 11'.

From the above-described explanation, in the pressure transmitter 1 of the first embodiment, the hydrogen-storage materials 19 are provided inside the pressure introducing pipes 11 and 11', and simultaneously, the hydrogen-permeation prevention layers 21 are provided on the pressure receiving diaphragms 13 and 13'. As a result of this configuration, it becomes possible to prevent the intrusion of the hydrogen into the pressure introducing pipes 11 and 11', and to suppress the generation of the gases inside the pressure introducing pipes 11 and 11'. These features allow implementation of the stabilization of the pressures inside the pressure introducing pipes 11 and 11', thereby making it possible to maintain the pressure transmission characteristics over a long time-period. Accordingly, it becomes possible to maintain the tolerable-error accuracy (e.g., accuracy of ±1 %) of the pressure transmitter 1 over a long time-period by reducing a variation in the instruction value. This feature allows extension of the lifespan of the pressure transmitter 1. In particular, the closer the pressures of the process fluids (i.e., measurement fluids Fh and Fl) become to the pressure of vacuum, the lower the pressure of the sealed-in liquid L becomes, and the smaller the solubility of the sealed-in liquid L becomes. Consequently, it becomes possible to obtain the outstanding effects with respect to the pressure transmitter 1.

As a result of the above-described features, it becomes possible to lighten the load of maintenance operations such as regular or irregular inspection for maintaining the accuracy of the pressure transmitter 1. As a result, it becomes possible to implement a reduction in the maintenance cost, including some replacement for maintaining the tolerable-error accuracy.

### ≪ 2nd Embodiment ≫

### (pressure transmitter used for absolute-pressure measurement)

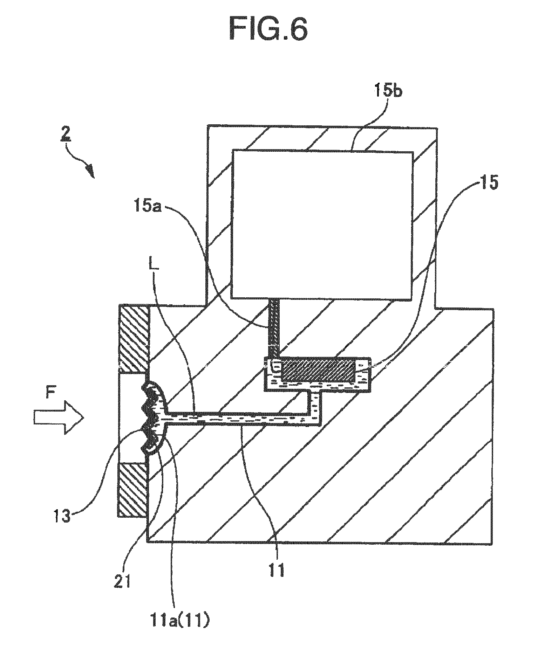

FIG. 6 is a diagram for illustrating the configuration of the pressure transmitter of the second embodiment. The pressure transmitter 2 illustrated in FIG. 6 is used for the pressure measurement where the process fluid in each kind of plant is employed as the measurement fluid. Concretely, this pressure transmitter 2 is used for the absolute-pressure measurement for measuring the pressure of a process fluid F.

### <configuration of pressure transmitter 2>

The configurations in which this pressure transmitter 2 differs from the pressure transmitter 1 of the first embodiment explained using FIG. 1 are as follows: Namely, with respect to the single pressure sensor 15, this pressure transmitter 2 includes only the single pressure receiving diaphragm 13 and only the single pressure introducing pipe 11. Moreover, the other-side aperture of the pressure introducing pipe 11 is deployed only on the one-side plane side of the pressure sensor 15. Furthermore, this pressure transmitter 2 is so configured as to detect the pressure of the process fluid F that is received by the pressure receiving diaphragm 13 provided on the one-side aperture of the pressure introducing pipe 11. The other configurations are basically the same as those explained in the first embodiment.

### <effect of pressure transmitter 2>

Even the pressure transmitter 2 of the second embodiment as described above is also capable of obtaining basically the same effects as those explained in the first embodiment. ≪ 3rd Embodiment ≫

### (pressure transmitter equipped with intermediate diaphragms)

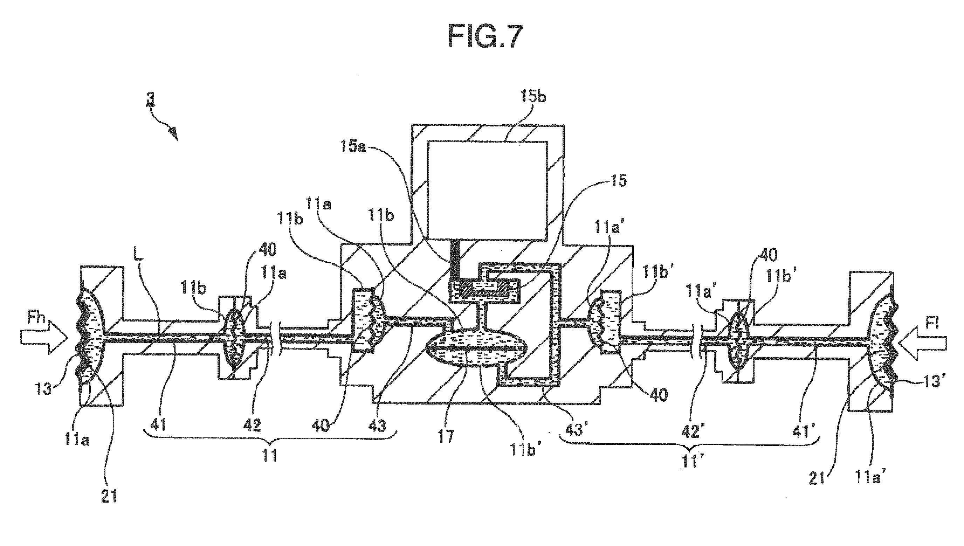

FIG. 7 is a diagram for illustrating the configuration of the pressure transmitter of the third embodiment. In the pressure measurement where the process fluid in each kind of plant is employed as the measurement fluid, the pressure transmitter 3 illustrated in FIG. 7 is suitable for a high-temperature environment in particular, and thus is used under this environment. Here, the pressure transmitter 3 will be explained assuming that this pressure transmitter 3 is the pressure transmitter for measuring the pressure difference between two points (i.e., high-pressure side and low-pressure side).

### <configuration of pressure transmitter 3>

The configurations in which this pressure transmitter 3 differs from the pressure transmitter 1 of the first embodiment explained using FIG. 1 are as follows: Namely, the pressure introducing pipes 11 and 11' are configured by connecting to each other a plurality of tube-body portions 41, 42, ..., and 41', 42', ... , respectively. Moreover, each of intermediate diaphragms 40 is set up at the connection portions of these respective tube-body portions 41, 42, ..., and 41', 42', .... The other configurations are basically the same. On account of this, the same reference numerals will be affixed to the same configurations as those in the pressure transmitter 1 of the first embodiment, and the overlapped explanation thereof will be omitted here.

### [pressure introducing pipes 11 and 11']

The pressure introducing pipes 11 and 11' include the plurality of in-series-connected tube-body portions 41, 42, ..., and 41', 42', .... In the illustrated example, the pressure introducing pipe 11 is configured with the three pieces of tube-body portions 41, 42, and 43, and the pressure introducing pipe 11' is configured with the three pieces of tube-body portions 41', 42', and 43'. Each of these tube-body portions 41, 42, and 43, and 41', 42', and 43' configures the pressure receiving chambers 11a and 11a' whose aperture diameters are enlarged in the portions of the one-side apertures on the pressure receiving sides of the measurement fluids Fh and Fl. Also, each of the tube-body portions 41, 42, and 43, and 41', 42', and 43' configures the pressure discharging chambers 11b and 11b' whose aperture diameters are enlarged in the portions of the other-side apertures.

Moreover, the tube-body portions 41 and 41', which are deployed on the closest sides to the measurement fluids Fh and Fl in the pressure introducing pipes 11 and 11', configure replacement-device units. The portions of the apertures of the pressure receiving chambers 11a and 11a' in these tube-body portions 41 and 41' are blocked by the pressure receiving diaphragms 13 and 13', respectively. Meanwhile, the tube-body portions 43 and 43', which are deployed on the closest sides to the pressure sensor 15 in the pressure introducing pipes 11 and 11', configure main-body units. The portions of the apertures of the pressure discharging chambers 11b and 11b' in these tube-body portions 43 and 43' are deployed in a manner where the single center diaphragm 17 is held by being sandwiched therebetween, and are in a state where the portions of the apertures are blocked by this center diaphragm 17.

Also, the tube-body portions 42 and 42', which are deployed in the centers of the pressure introducing pipes 11 and 11', configure capillary units, respectively. Here, these capillary units are respectively connection regions of the tube-body portions 41 and 41' configuring the replacement-device units, and the tube-body portions 43 and 43' configuring the main-body units.

In each of the connection portions of the respective tube-body portions 41, 42, and 43, and 41', 42', and 43', the aperture of the pressure discharging chamber 11b and the aperture of the pressure receiving chamber 11a are deployed in a manner of being opposed to each other. Each of the intermediate diaphragms 40 is held by being sandwiched between these apertures-opposed portions. These apertures are in a state of being blocked by this intermediate diaphragm 40. Namely, the pressure introducing pipes 11 and 11' are configured by connecting to each other the plurality of tube-body portions 41, 42, and 43, and 41', 42', and 43', respectively. The respective internal spaces of these tube-body portions, however, are in a state of being separated from each other by each of the intermediate diaphragms 40.

Moreover, the respective tube-body portions 41, 42, and 43, and 41', 42', and 43' are independently blocked by the pressure receiving diaphragms 13 and 13', the pressure sensor 15, the center diaphragm 17, and the intermediate diaphragms 40. Each of these independently-blocked tube-body portions is in a state of being filled with the sealed-in liquid L. Furthermore, a hydrogen-storage material 19 similar to that of the first embodiment is provided inside each of the tube-body portions 41, 42, and 43, and 41', 42', and 43' (which configure the pressure introducing pipes 11 and 11') in a similar deployment state. Simultaneously, hydrogen-permeation prevention layers 21 similar to those of the first embodiment are provided on the pressure receiving diaphragms 13 and 13' in a similar deployment state.

Incidentally, here, not being limited to the configuration where the hydrogen-storage material 19 is provided inside all of the tube-body portions 41, 42, and 43, and 41', 42', and 43', this configuration may also be applied to only a selected tube-body portion. In this case, for example, the hydrogen-storage material 19 is provided inside the tube-body portions 41 and 41' which are deployed on the closest sides to the measurement fluids Fh and Fl.

### [intermediate diaphragms 40]

The intermediate diaphragms 40 are provided at the intermediate portions of the pressure introducing pipes 11 and 11' that are deployed from the pressure receiving diaphragms 13 and 13' to the pressure sensor 15. The intermediate diaphragms 40 are used for preventing the destruction of the pressure receiving diaphragms 13 and 13' and the pressure sensor 15 cause by excessive pressures applied thereto. The intermediate diaphragms 40 like this block the intermediate portions of each of the pressure introducing pipes 11 and 11', thereby separating the pressure introducing pipes 11 and 11' into the plurality of tube-body portions 41, 42, and 43, and 41', 42', and 43', respectively. Simultaneously, the intermediate diaphragms 40 are provided so that both sides of each intermediate diaphragm 40 is exposed to the sealed-in liquid L. On account of this set-up of the intermediate diaphragms 40, even if an excessive pressure is applied to one of the pressure receiving diaphragms 13 and 13', the intermediate diaphragms 40 become relaxation materials for the excessive pressure. This feature results in a configuration where it is highly unlikely that the destruction of the pressure receiving diaphragms 13 and 13' and the pressure sensor 15 will occur. Incidentally, of the intermediate diaphragms 40, the intermediate diaphragm 40 deployed at the position closest to the pressure sensor 15 configures the main-body unit as a seal diaphragm.

The hydrogen-storage materials 19 may also be provided on the intermediate diaphragms 40 like this. In this case, the hydrogen-storage materials 19 are provided on both planes of each intermediate diaphragm 40 which are in contact with the sealed-in liquid L. This makes it possible to make the surface areas of the hydrogen-storage materials 19b even wider.

As is the case with the second embodiment explained using FIG. 6, the pressure transmitter 3 of the third embodiment can be changed into the absolute-pressure-measurement-used pressure transmitter by using only one of the pressure introducing pipes 11 and 11'.

### <effect of pressure transmitter 3>

The pressure transmitter 3 of the third embodiment as described above is used under a high-temperature environment. Accordingly, at the time of being used, the pressure transmitter 3 is instantaneously exposed to a high-temperature (exceeding, e.g., 300 °C) atmosphere in some cases. Even in the case like this, as is the case with the first embodiment, the pressure transmitter 3 makes it possible to prevent the mixing of the hydrogen into the pressure introducing pipes 11 and 11', and to suppress the generation of the gases inside the pressure introducing pipes 11 and 11'. This is because the pressure transmitter 3 is configured in such a manner that the hydrogen-storage material 19 is provided inside each of the tube-body portions 41, 42, and 43, and 41', 42', and 43' (which configure the pressure introducing pipes 11 and 11'), and the hydrogen-permeation prevention layers 21 are provided on the pressure receiving diaphragms 13 and 13'. As a result, it becomes possible to maintain the pressure transmission characteristics over a long time-period.

### ≪ 4th Embodiment ≫

### (application example of pressure transmitter in nuclear-power plant)

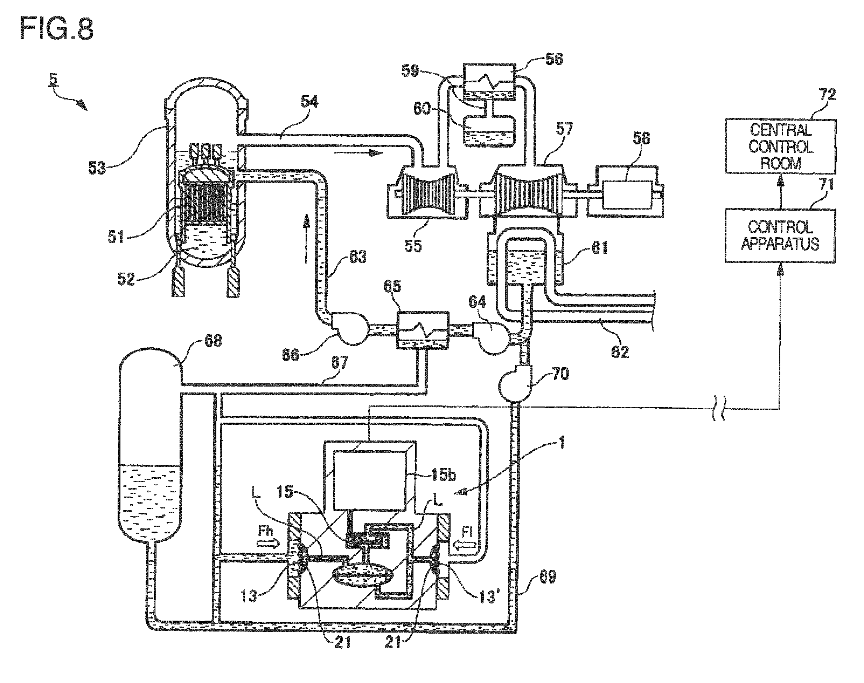

FIG. 8 is a diagram for illustrating an application example of the pressure transmitter in a nuclear-power plant. In particular, FIG. 8 is the diagram for illustrating the configuration of the feedwater system and condensate system in the BWR (: Boiling Water Reactor) plant. Hereinafter, based on FIG. 8, the explanation will be given below concerning the following example: Namely, as an example of the process measurement in the feedwater system and condensate system of the nuclear-power plant, the pressure transmitter is used for the water-level measurement of the drain tank of a feedwater heater.

As illustrated in FIG. 8, the nuclear-power plant 5 includes a pressure vessel 53 where a reactor core 51, i.e., the assembly of nuclear fuels, is contained in a state of being immersed within furnace water 52. A high-pressure turbine 55 is connected to the pressure vessel 53 via a main steam pipe 54, and a low-pressure turbine 57 is connected to this high-pressure turbine 55 via a moisture separation heater 56. The high-pressure turbine 55 and the low-pressure turbine 57 are deployed in a coaxial manner. A power generator 58, which is operated by these turbines, is connected to these turbines. A drain tank 60 is connected to the moisture separation heater 56 via a drain pipe 59.

Also, a condenser 61 is provided on the low-pressure turbine 57. A cooling pipe 62 is installed inside the condenser 61. This condenser 61 and the pressure vessel 53 are in a state of being connected to each other via a condensate pipe 63. A condensate pump 64, a feedwater heater 65, and a feedwater pump 66 are provided along the condensate pipe 63 in the sequence from the side of the condenser 61. This system allows the furnace water 52 to be circulated between the pressure vessel 53, and the high-pressure turbine 55 and the low-pressure turbine 57. Also, a drain tank 68 is connected to the feedwater heater 65 via a drain pipe 67. The drain tank 68 is connected to the condenser-61 side of the condensate pipe 63 via a feedwater pipe 69 and by a drain pump 70.

In the nuclear-power plant 5 configured as described above, the pressure transmitter is used for the water-level measurement of the drain tank 68 of the feedwater heater 65. For example, the pressure transmitter 1 of the first embodiment explained earlier using FIG. 1 is applied as this pressure transmitter.

In this case, the fluid flowing through the upstream-side pipe of the drain tank 68, i.e., the fluid flowing through the feedwater pipe 69 between the drain tank 68 and the condenser 61 is defined and employed as the high-pressure-side measurement fluid Fh, then being fed to the one pressure receiving diaphragm 13 in the pressure transmitter 1. Also, the fluid flowing through the downstream-side pipe of the drain tank 68, i.e., the fluid flowing through the drain pipe 67 between the drain tank 68 and the feedwater heater 65 is defined and employed as the low-pressure-side measurement fluid Fl, then being fed to the other pressure receiving diaphragm 13' in the pressure transmitter 1.

This configuration results in a configuration where the differential pressure between the upstream side and the downstream side of the drain tank 68 is received by the pressure sensor 15 of the pressure transmitter 1, and is outputted to the output circuit 15b.

In the nuclear-power plant 5, the information from the output circuit 15b is so configured as to be transmitted to a central control room 72 via a control apparatus 71. Moreover, the information (i.e., differential pressure) outputted to the output circuit 15b is monitored as the water level of the drain tank 68. Furthermore, based on this value, the control is performed so that the water level of the drain tank 68 becomes equal to a predetermined value.

The feedwater system and condensate system of the nuclear-power plant 5 explained so far are special environments where the radiation doses are high. As a result, it is highly likely that, in these environments, the sealed-in liquid L will be subjected to the radiation decomposition in the pressure transmitter 1 provided for the water-level measurement of the drain tank 68. In view of this situation, the pressure transmitter 1 of the first embodiment is applied. Then, as was explained earlier, it becomes possible to prevent the mixing of the hydrogen into the pressure introducing pipes 11 and 11', and to suppress the generation of the gases therein. This feature allows the long time-period measurement accuracy to be ensured even under the radiation environments, and because of this, it becomes possible to reduce the maintenance cost.

Incidentally, here, the configuration is exemplified where the pressure transmitter 1 of the first embodiment is used for the water-level measurement of the drain tank 68. However, the pressure transmitter to be provided in the nuclear-power plant 5 is not limited to this pressure transmitter 1, but the pressure transmitter can be used whose configuration was explained in the third embodiment (FIG. 7).

In particular, in the feedwater system and condensate system of the nuclear-power plant 5, the furnace water 52 for directly cooling the reactor core 51 is employed as the measurement fluid. Accordingly, the furnace water 52 becomes the one that contains tremendous amounts of hydrogen generated by its radiation decomposition and the like. This furnace water 52 is introduced, as steam, from the main steam pipe 54 into the moisture separation heater 56, the drain tank 60, the feedwater heater 65, the condenser 61, and the drain tank 68. The furnace water 52 introduced as the steam is condensed by the moisture separation heater 56, the feedwater heater 65, and the like, thereby becoming condensed water. Meanwhile, the specific gravity of the non-condensation-property hydrogen contained in the steam is smaller than the specific gravity of the saturated steam. As a result, the hydrogen is accumulated over the furnace water 52, thereby gradually becoming higher in its concentration. The higher the concentration of the hydrogen becomes which is accumulated over the furnace water 52, i.e., the measurement fluid, the likelier the hydrogen becomes to permeate the pressure receiving diaphragms 13 and 13'.

Consequently, the pressure transmitter in which the hydrogen-permeation prevention layers 21 are provided on the pressure receiving diaphragms 13 and 13' is used for, in particular, the process measurement in the feedwater system and condensate system of the nuclear-power plant 5. This use makes it possible to prevent the intrusion of the hydrogen into the pressure introducing pipes 11 and 11', which becomes effective in ensuring the measurement accuracy over a long time-period.

Also, in the above-described explanation, the configuration has been exemplified where the pressure transmitter 1 is used for the water-level measurement of the drain tank 68 of the feedwater heater 65. However, the set-up location of the pressure transmitter 1 in the nuclear-power plant 5 is not limited thereto. In particular, it is effective to use the pressure transmitter 1 for respective kinds of process measurements where the furnace water 52 for directly cooling the reactor core 51 is employed as the measurement fluid. For example, the pressure transmitter 1 is used for the process measurements such as the water-level measurements of the drain tank 60 of the moisture separation heater 56 and of the condenser 61, and further, the flow-amount measurements of the main steam pipe 54 and the condensate pipe 63. These examples make it possible to exhibit the sufficient effects similarly. The pressure transmitters of the configurations of the first to third embodiments, and of the configuration obtained by combining these configurations are used for these respective kinds of process measurements. For the absolute-pressure measurement, however, the pressure transmitter of the configuration explained in the second embodiment, or the pressure transmitter of a configuration obtained by the combination therewith is used.

The nuclear-power plant in which the pressure transmitter of the present invention is set up is not limited to the above-described BWR (: Boiling Water Reactor) plant. For example, this nuclear-power plant may also be the PWR (: Pressurized Water Reactor) plant. In this case, similarly, the pressure transmitter of the present invention is used for making the respective kinds of process measurements where the furnace water (i.e., primary coolant) for directly cooling the reactor core 51 is employed as the measurement fluid. This use makes it possible to obtain similar effects.

In the foregoing description, the explanation has been given concerning the embodiments of the present invention. The present invention, however, is not limited to the above-described embodiments. Namely, a variety of modifications and amendments can be made without departing from the spirit of the invention disclosed within the scope of the appended claims.

For example, in the above-described embodiments, the configurations of the devices and systems are explained in detail and concretely in order to explain the present invention in an easy-to-understand manner. Namely, the above-described embodiments are not necessarily limited to the ones that are equipped with all of the configurations explained. Also, a part of the configuration of a certain embodiment can be replaced by the configuration of another embodiment. Moreover, the configuration of another embodiment can be added to the configuration of a certain embodiment. Also, the addition, deletion, and replacement of another configuration can be performed with respect to a part of the configuration of each embodiment. Also, only the control lines and information lines are indicated which can be considered as being necessary from the explanation's point-of-view. Namely, all of the control lines and information lines are not necessarily indicated from the product's point-of-view. It may also be considered that almost all of the configurations are connected to each other actually.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A pressure transmitter (1), comprising:
tube-like pressure introducing pipes (11, 11');
a sealed-in liquid (L), the inside of said pressure introducing pipes (11, 11') being filled with said sealed-in liquid (L);
pressure receiving diaphragms (13, 13') for receiving the pressures of measurement fluids (Fh, Fl), said pressure receiving diaphragms (13, 13') being set up in a state where one-side apertures in said pressure introducing pipes (11, 11') are blocked by said pressure receiving diaphragms (13, 13');
a pressure sensor (15) that is set up at the other-side apertures in said pressure introducing pipes (11, 11') in a state where said pressure sensor (15) is exposed to said sealed-in liquid (L); and
hydrogen-permeation prevention layers (21) that are set up on said pressure receiving diaphragms (13, 13'), wherein
said pressure transmitter (1) further comprises a hydrogen-storage material that is set up inside said pressure introducing pipes (11, 11').

2. The pressure transmitter (1) according to Claim 1, wherein
said hydrogen-storage material stores hydrogen atoms contained within hydrogen and hydrocarbons, said hydrocarbons being generated inside said pressure introducing pipes (11, 11').

3. The pressure transmitter (1) according to Claim 1 or 2, wherein
said hydrogen-storage material is deployed along the installation direction of said pressure introducing pipes (11, 11').

4. The pressure transmitter (1) according to any of Claims 1 to 3, wherein
said hydrogen-storage material is mixed into said sealed-in liquid (L).

5. The pressure transmitter (1) according to any of Claims 1 to 3, wherein
said hydrogen-storage material is set up on the inner walls of said pressure introducing pipes (11, 11').

6. The pressure transmitter (1) according to any of Claims 1 to 3, wherein
said hydrogen-storage material is installed inside said pressure introducing pipes (11, 11').

7. The pressure transmitter (1) according to any of Claims 1 to 6, wherein
said hydrogen-storage material is palladium, magnesium, vanadium, titanium, manganese, zirconium, nickel, niobium, cobalt, calcium, or an alloy of them.

8. The pressure transmitter (1) according to any of Claims 1 to 7, wherein
said hydrogen-permeation prevention layers (21) are respectively set up as surface layers in said pressure receiving diaphragms (13, 13') on the sides of said pressure introducing pipes (11, 11'), or are respectively set up as intermediate layers of said pressure receiving diaphragms (13, 13').

9. The pressure transmitter (1) according to any of Claims 1 to 8, wherein
said hydrogen-permeation prevention layers (21) are configured with a hydrogen-storage material or a hydrogen-interruption material.

10. The pressure transmitter (1) according to any of Claims 1 to 8, wherein
said hydrogen-permeation prevention layers (21) are configured with gold, silver, copper, platinum, aluminum, chromium, titanium, or an alloy of them.

11. The pressure transmitter (1) according to any of Claims 1 to 10, wherein
said single pair of pressure introducing pipes (11, 11') are deployed in a state where said pressure sensor (15) is held by being sandwiched between said pressure introducing pipes (11, 11') from the sides of both planes of said pipes (11, 11'), said inside of said pressure introducing pipes (11, 11') being filled with said sealed-in liquid (L), said one-side apertures of said pressure introducing pipes (11, 11') being blocked by said pressure receiving diaphragms (13, 13').

12. The pressure transmitter (1) according to any of Claims 1 to 11, further comprising:
a center diaphragm (17) that is held in parallel to said pressure sensor (15) by being sandwiched between said single pair of pressure introducing pipes (11, 11'),
said hydrogen-storage material being set up on said center diaphragm (17).

13. The pressure transmitter (1) according to any of Claims 1 to 12, wherein
said pressure introducing pipes (11, 11') comprise a plurality of in-series-connected tube-body portions (41, 42, 43, ···, 41', 42', 43', ···), and each of intermediate diaphragms (40) set up at the connection portions of said respective tube-body portions (41, 42, 43, ..., 41', 42', 43', ...),
said hydrogen-storage material being set up on said intermediate diaphragms (40).
